## Europäisches Patentamt
## European Patent Office
## Office européen des brevets

(19)

(11) Numéro de publication: **0 298 862**
**B1**

(12)

# FASCICULE DE BREVET EUROPEEN

(45) Date de publication du fascicule du brevet:
26.09.90

(51) Int. Cl.⁵: **F16F 13/00**

(21) Numéro de dépôt: 88401756.7

(22) Date de dépôt: 05.07.88

(54) **Support hydroélastique, notamment pour assurer la suspension d'un moteur dans un véhicule.**

(30) Priorité: 07.07.87 FR 8709650

(43) Date de publication de la demande:
11.01.89 Bulletin 89/2

(45) Mention de la délivrance du brevet:
26.09.90 Bulletin 90/39

(84) Etats contractants désignés:
DE GB IT SE

(73) Titulaire: AUTOMOBILES PEUGEOT, 75, avenue de la Grande Armée, F-75116 Paris(FR)
Titulaire: AUTOMOBILES CITROEN, 62 Boulevard Victor-Hugo, F-92200 Neuilly-sur-Seine(FR)

(72) Inventeur: Le Fol, Marcel, 12, Impasse du Verger DOMLOUP, F-35410 Chateaugiron(FR)
Inventeur: Robic, Pascal, La Cheurtière, F-35580 Guignen(FR)

(74) Mandataire: Moncheny, Michel et al, c/o Cabinet Lavoix 2 Place d'Estienne d'Orves, F-75441 Paris Cedex 09(FR)

(56) Documents cités:
EP-A- 0 154 268
DE-A- 3 245 653
DE-A- 3 610 611
FR-A- 2 547 378

PATENT ABSTRACTS OF JAPAN,
vol. 10, no. 227 (M-505)[2283], 7 août 1986, page 99 M 505; &
JP-A-61 62 632 (KINUGAWA RUBBER IND. CO., LTD) 31-03-1986
IDEM
PATENT ABSTRACTS OF JAPAN,
vol. 10, no. 227 (M-505)[2283], 7 août 1986; &
JP-A-61 62 631 (KINUGAWA RUBBER IND. CO., LTD) 31-03-1986
IDEM

(56) Documents cités: (suite)
PATENT ABSTRACTS OF JAPAN,
vol. 9, no. 322 (M-440)[2045], 18 décembre 1985, page 11 M 440; & JP-A-60 155 029 (NISSAN JIDOSHA K.K.) 14-08-1985
PATENT ABSTRACTS OF JAPAN,
vol. 9, no. 294 (M-431)[2017], 20 novembre 1985, page 90 M 431; &
JP-A-60 132 144 (BRIDGESTONE K.K.) 15-07-1985

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les supports hydroélastiques utilisés, notamment, pour assurer la suspension d'un moteur dans un véhicule automobile.

On connaît, notamment par le brevet FR-A 7 926 137, un support comprenant deux armatures destinées à être reliées l'une au moteur et l'autre à la structure du véhicule, ces deux armatures étant reliées par un bloc de matériau élastomère qui délimite en partie une chambre de travail. Cette dernière, remplie de liquide hydraulique est également remplie de liquide. Le conduit de liaison entre les deux chambres est en général délimité par une cloison portée par l'une des deux armatures et qui sépare la chambre de travail de la chambre d'expansion.

Cette cloison peut également comporter une partie mobile suivant une direction perpendiculaire à son plan moyen, cette partie mobile pouvant se déplacer sur une distance relativement faible de l'ordre de quelques dixièmes de millimètre.

Dans un tel support, l'amortissement maximal est obtenu lors de la mise en résonance de la colonne de liquide contenue dans le conduit reliant la chambre de travail à la chambre d'expansion. Cette résonance se produit pour une fréquence de valeur déterminée, de sorte qu'en dehors d'une zone située de part et d'autre de cette valeur, l'amortissement procuré par le support peut se révéler insuffisant.

Le document JP-A 6 162 632 décrit un support hydroélastique analogue, comprenant deux chambres d'expansion concentriques, délimitées par la cloison et par une membrane unique et reliées, respectivement, à la chambre de travail par deux conduits distincts ménagés dans la cloison.

Le but de cette invention est de réaliser un support hydroélastique qui offre précisément des caractéristiques d'amortissement important sur une plage de fréquence plus large que les supports existants, tout en étant d'une construction simple et compacte et d'un fonctionnement fiable.

A cet effet l'invention a pour objet un support hydroélastique, comprenant deux armatures reliées par un bloc de matériau élastomère, une cloison rigide portée par l'une des armatures, une chambre de travail délimitée en partie par le bloc de matériau élastomère et par ladite cloison, et deux chambres d'expansion concentriques, délimitées au moins en partie par la cloison rigide et par une membrane unique, ces chambres d'expansion communiquant avec la chambre de travail par l'intermédiaire de deux conduits ménagés dans la cloison rigide et ayant des caractéristiques de longueur et/ou de section différentes, caractérisé en ce que le support comprend un couvercle qui est solidaire de l'armature portant la cloison, et qui délimite un rebord annulaire appliquant à joint étanche une partie intermédiaire de la membrane contre la cloison.

L'invention va être décrite plus en détails ci-dessous en se référant aux dessins annexés, donnés à titre d'exemples et sur lesquels:

La figure 1 est une vue en coupe suivant la ligne 1–1 de la figure 2 d'un support suivant l'invention;

La figure 2 est une vue en plan de dessous d'un élément entrant dans la constitution de ce support;

La figure 3 est une vue en coupe axiale suivant la ligne 3–3 de la figure 4;

La figure 4 est une vue en plan destinée à montrer la forme des conduits reliant la chambre de travail aux chambres d'expansion; et

La figure 5 est un diagramme illustrant la caractéristique d'amortissement d'un support suivant l'invention.

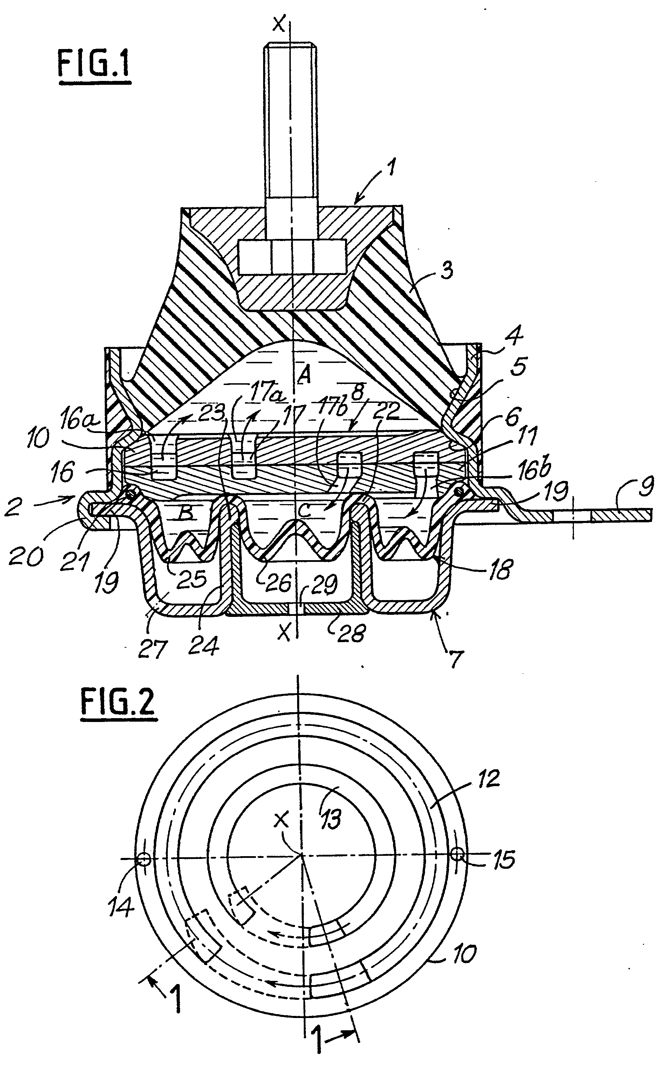

On a représenté aux figures 1 et 2 un support hydroélastique pouvant être incorporé entre un moteur et la structure d'un véhicule automobile. A cet effet, un tel support comprend une première armature 1 destinée à être fixée sur l'un des deux sous-ensembles à relier et une deuxième armature 2 destinée à être reliée à l'autre de ces deux sous-ensembles. Ces deux armatures sont reliées par un bloc de matériau élastomère 3 adhérisé sur des parties en regard des deux armatures.

L'axe du support étant désigné par X–X, la deuxième armature 2 comprend une partie 4 à peu près axiale qui est conformée de façon à délimiter deux surfaces 5, 6 inclinées par rapport à l'axe X–X. La première 5 de ces surfaces, dirigée vers la première armature reçoit le bloc de matériau élastomère tandis que l'autre 6, dirigée vers un couvercle 7 participe au maintien d'une cloison 8. L'armature 2 comporte par ailleurs des pattes radiales 9 servant à sa fixation sur le sous-ensemble adjacent.

La cloison 8 est ici réalisée sous la forme de deux plaquettes identiques 10, 11 comportant chacune deux canaux 12, 13 formés dans une de leur face, ces canaux concentriques s'étendant sur une partie notable de circonférence et débouchant sur la face opposée de la plaque, au voisinage d'une de leurs extrémités. Chacune des deux plaquettes comporte sur la face dans laquelle sont ménagés les canaux un pion 14 et un logement 15, diamétralement opposés, de sorte qu'elles peuvent être assemblées comme représenté sur la figure 1 pour délimiter des canaux ou conduits 16, 17 qui débouchent à leurs deux extrémités, respectivement en 16a, 17a et 16b, de part et d'autre de la cloison constituée par les deux plaquettes. La figure 2 représente la plaquette 10, vue de dessous.

Les plaquettes ainsi qu'une membrane 18 en matériau souple sont fixées et maintenues en place entre la surface 6 de l'armature 2 et un rebord à peu près radial 19 du couvercle 7 maintenu sur l'armature par sertissage comme représenté en 20.

La membrane comporte à sa périphérie un jonc 21 en matière thermoplastique, acier ou autre matériau relativement rigide, qui assure son maintien lors de l'opération de sertissage. La membrane 18 est ondulée, l'une 22 de ses ondulations étant appliquée à contact étanche contre la face adjacente de la cloison 8 par le bord arrondi 23 d'une jupe annulaire 24 que forme le couvercle 7. La zone de contact étanche entre la membrane 18 et la cloison 8 est située entre les deux orifices 16b, 17b par lesquels les canaux ou conduits 16 et 17 débouchent sur cette même face.

Les autres ondulations de la membrane forment des soufflets 25, 26.

Le couvercle 7 assure la protection de la partie périphérique 25 de la membrane et comporte un orifice 27 de mise à l'air libre. Ce couvercle est complété par un bouchon 28 également muni d'un orifice d'évent 29, qui assure la protection de la partie centrale 26 de la membrane.

La masse 3 de matériau élastomère, la cloison 8 et la membrane délimitent, d'une part, une chambre de travail A et, d'autre part, deux chambres d'expansion B et C. La chambre d'expansion B est reliée à la chambre de travail par le conduit 16 et la chambre d'expansion C est reliée à la chambre de travail par le conduit 17.

La chambre de travail, de même que les chambres d'expansion et les conduits qui les relient sont remplis de liquide hydraulique, comme cela est bien connu dans ce type de support.

Dans l'exemple représenté, les deux conduits 16 et 17 ont à peu près la même section mais des longueurs différentes de sorte que la mise en résonance de la colonne de liquide contenue dans chacun de ces conduits se produit pour des fréquences différentes. La colonne extérieure étant accordée sur une première fréquence, la fréquence d'accord de la colonne intérieure est ainsi plus élevée.

Lorsque la résonance de la colonne de liquide à plus basse fréquence est atteinte, le liquide ne circule plus entre la chambre de travail A et la chambre d'expansion correspondante B, de sorte qu'un premier amortissement se produit. Par contre le liquide circule toujours par l'intermédiaire de second conduit, en l'occurence le conduit intérieur 17. Lorsque la résonance correspondant à ce deuxième conduit est atteinte, un second amortissement se produit.

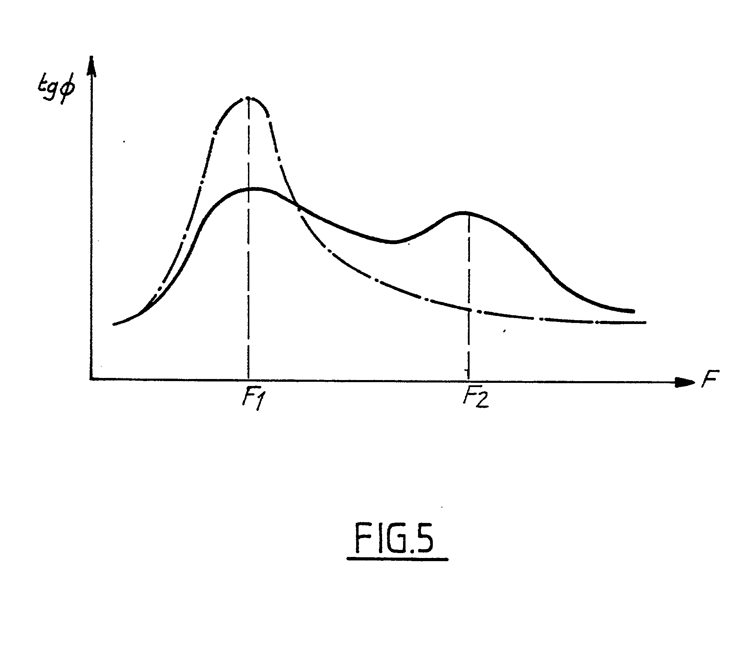

Ce fonctionnement est illustré à la figure 5 sur laquelle on a représenté en trait plein la caractéristique d'amortissement tg d'un support selon l'invention, les deux sommets de cette courbe correspondant aux deux fréquences d'amortissement rspectives F1, F2.

On a également fait figurer en trait mixte sur ce schéma une courbe d'amortissement correspondant à une cale hydroélastique classique qui offre une plage d'amortissement beaucoup plus étroite.

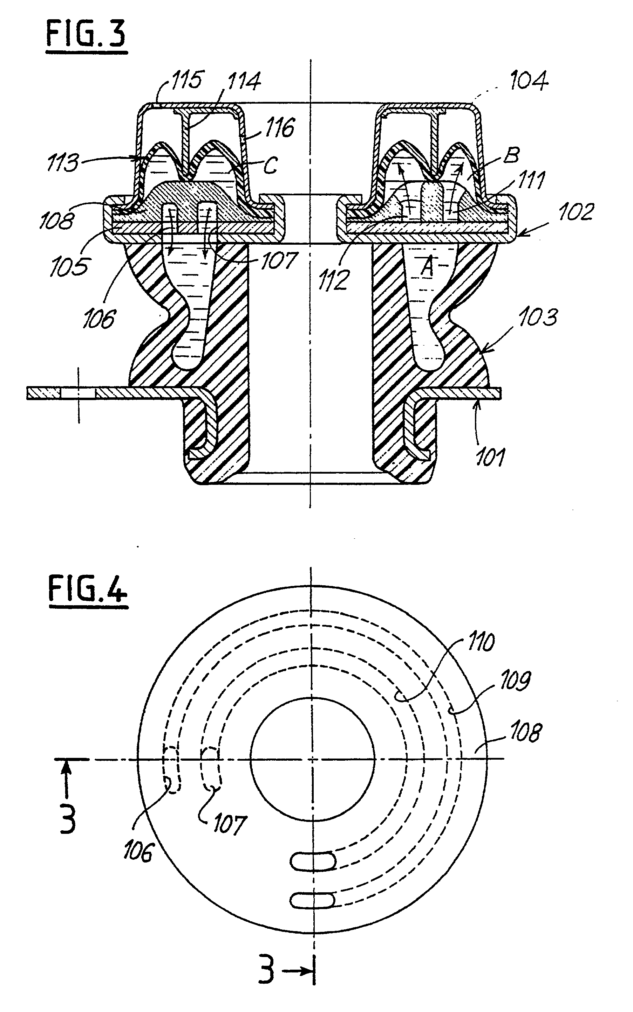

Les figures 3 et 4 représentent une variante dans laquelle la même caractéristique générale est incorporée à un support hydroélastique dit à axe traversant.

Un tel support comprend une première armature 101 destinée à être fixée à l'un des deux sous-ensembles à relier et une deuxième armature 102 destinée à être fixée à l'autre de ces deux sous-ensembles. Ces deux armatures sont reliées par une masse de matériau élastomère 103, ces trois éléments ayant une forme annulaire de façon à ménager autour de l'axe X–X du support une zone centrale dégagée dans laquelle peut s'étendre un organe de fixation (non représenté). L'armature 102 est sertie à sa périphérie interne et à sa périphérie externe sur deux rebords d'un couvercle 104 de forme annulaire à section en U. Entre le couvercle 104 et l'armature 102 sont disposés et maintenus une plaque 105 délimitant deux orifices 106, 107 également visibles sur la figure 4, une pièce moulée 108 délimitant deux canaux 109, 110 s'étendant sur une partie notable de circonférence et qui débouchent au voisinage d'une de leurs extrémités en 111, 112 sur la face de cet élément opposée à la plaquette 105, et enfin une membrane souple 113 en matériau élastomère.

Cette membrane est appliquée contre la pièce 108 dans une portion intermédiaire de celle-ci comprise entre les deux orifices 111 et 112, le contact étanche entre la membrane et cette pièce étant réalisé au moyen d'une pièce intermédiaire annulaire 114 à section en L elle-même maintenue par le fond du couvercle 104. Ce dernier comporte deux orifices d'évent 115 et 116.

Le support comporte ainsi une chambre de travail annulaire A délimitée essentiellement par la masse de matériau élastomère et l'armature 102 et deux chambres d'expansion B, C déllimitées entre la pièce 108 et la membrane 113. Ces deux chambres d'expansion sont reliées à la chambre de travail par les deux conduits 109 et 110 de longueurs différentes.

Le fonctionnement d'un tel support est analogue à celui déjà décrit à propos du mode de réalisation des figures 1 et 2.

Suivant une autre variante, représentée également sur la figure 3, la membrane souple 113 peut avoir une épaisseur différente dans ses portions délimitant respectivement les deux chambres d'expansion B et C. Ceci permet de faire varier la tenue à la pression des membranes, alors que par contre la tenue à la pression de la partie porteuse est constante puisque la chambre de travail est unique.

Il est clair également, compte tenu de ce qui a été dit précédemment, que l'on peut choisir à volonté les sections et les longueurs des deux conduits reliant la chambre de travail aux chambres d'expansion pour obtenir les caractéristiques d'amortissement souhaitées.

## Revendications

1. Support hydroélastique, comprenant deux armatures (1, 2; 101, 102) reliées par un bloc de matériau élastomère (3; 103), une cloison rigide (8; 105, 108) portée par l'une des armatures (2; 102), une chambre de travail (A) délimitée en partie par le bloc de matériau élastomère et par ladite cloison, et deux chambres d'expansion concentriques (B, C), délimitées au moins en partie par la cloison rigide et par une membrane unique (18; 113), ces chambres d'expansion communiquant avec la chambre de travail par l'intermédiaire de deux conduits (16, 17; 109, 110) ménagés dans la cloison rigide et ayant des caractéristiques de longueur et/ou de section différentes, caractérisé en ce que le support comprend un couvercle (7; 104) qui est solidaire de l'armature (2; 102) portant la cloison (8; 105, 108) et qui délimite un rebord annulaire (23, 24; 114) appliquant à joint étanche une partie intermédiaire de la membrane (18; 113) contre la cloison (8; 105, 108).

2. Support suivant la revendication 1, caractérisé en ce que ladite membrane a une épaisseur sensiblement constante.

3. Support suivant la revendication 1, caractérisé en ce que ladite membrane a une épaisseur différente dans chacune de ses parties délimitant les chambres d'expansion respectives (B, C).

4. Support suivant la revendication 1, caractérisé en ce que le couvercle (7) comporte une jupe (24) qui délimite ledit rebord (23) ainsi qu'un évidement central obturé par un bouchon (28).

5. Support suivant la revendication 1, caractérisé en ce que ledit rebord est délimité par une pièce intermédiaire (114) disposée entre le couvercle (104) et la membrane (113).

6. Support suivant l'une quelconque des revendications 1 à 5, caractérisé en ce que le couvercle et le bouchon comportent des orifices d'évent (27, 29; 115, 116) dans les zones recouvrant les chambres d'expansion (B, C).

7. Support suivant l'une quelconque des revendications 1 à 6, caractérisé en ce que la membrane (18; 113) est maintenue à sa périphérie entre l'armature (2; 102) portant la cloison, et un rebord sensiblement radial du couvercle.

## Patentansprüche

1. Hydroelastisches Auflager, mit zwei Armaturen (1, 2; 101, 102), die durch einen Block aus elastomerem Werkstoff (3; 103) verbunden sind, einer starren Trennwand (8; 105, 108), die durch eine der Armaturen (2; 102) getragen wird, einer Arbeitskammer (A), die teils durch den Block aus elastomerem Werkstoff und die Trennwand begrenzt wird, und zwei konzentrischen Expansionskammern (B, C), die mindestens teilweise durch die starre Trennwand und durch eine einzelne Membran (18; 113) begrenzt werden, wobei diese Expansionskammern mit der Arbeitskammer über zwei Leitungen (16, 17; 109, 110) verbunden sind, die in der starren Trennwand angebracht sind und die sich bezüglich Länge und/oder Querschnitt unterscheiden, dadurch gekennzeichnet, daß das Auflager eine Abdeckung (7; 104) umfaßt, die fest mit der Armatur (2; 102) verbunden ist, die die Trennwand (8; 105, 108) trägt und die einen Ringflansch (23, 24; 114) begrenzt und die unter dichter Verbindung einen Zwischenabschnitt der Membran (18; 113) gegen die Trennwand (8; 105, 108) drückt.

2. Auflager nach Anspruch 1, dadurch gekennzeichnet, daß die Membran eine im wesentlichen konstante Dicke hat.

3. Auflager nach Anspruch 1, dadurch gekennzeichnet, daß die Membran in jedem ihrer Abschnitte, die die jeweiligen Expansionskammern (B, C) begrenzen, eine unterschiedliche Dicke hat.

4. Auflager nach Anspruch 1, dadurch gekennzeichnet, daß die Abdeckung (7) einen Mantel (24) umfaßt, der den genannten Ringflansch (23) begrenzt sowie eine mittige Ausnehmung, die durch einen Stöpsel (28) verschlossen ist.

5. Auflager nach Anspruch 1, dadurch gekennzeichnet, daß der Ringflansch durch ein Zwischenstück (114) begrenzt wird, das zwischen der Abdeckung (104) und der Membran (113) angeordnet ist.

6. Auflager nach einem der Ansprüche 1 bis 5, dadurch gekennzeichnet, daß die Abdeckung und der Stöpsel in den Zonen, die die Expansionskammern (B, C) abdecken, Abzugsöffnungen (27, 29; 115, 116) aufweisen.

7. Auflager nach einem der Ansprüche 1 bis 6, dadurch gekennzeichnet, daß die Membran (18; 113) zwischen der die Trennwand tragenden Armatur (2; 102) und einem im wesentlichen radialen Flansch der Abdeckung gehalten wird.

## Claims

1. A hydroelastic support, comprising two frames (1, 2; 101, 102) connected by a block of elastomeric material (3; 103), a rigid partition (8: 105, 108) carried by one of the frames (2; 102), a working chamber (A) partly defined by the block of elastomeric material and by the said partition, and two concentric expansion chambers (B, C), defined at least in part by the rigid partition and by a single diaphragm (18; 113), these expansion chambers communicating with the working chamber through two pipes (16, 17; 109, 110) contrived in the rigid partition and having different characteristics of length and/or cross section, characterised in that the support comprises a cover (7; 104) which is integral with the frame (2; 102) carrying the partition (8; 105, 108) and which defines an annular flange (23, 24: 114) applying an intermediate part of the diaphragm (18; 113) against the partition (8; 105, 108) so as to form a seal.

2. Support as claimed in claim 1, characterised in that the said diaphragm has a substantially constant thickness.

3. Support as claimed in claim 1, characterised in that the said diaphragm has a thickness which is different in each of its parts defining the respective expansion chambers (B, C).

4. Support as claimed in claim 1, characterised in that the cover (7) comprises a skirt (24) which defines the said flange (23) as well as a central hollow space closed by a plug (28).

5. Support as claimed in claim 1, characterised in that the said flange is defined by an intermediate piece (114) disposed between the cover (104) and the diaphragm (113).

6. Support as claimed in any one of claims 1 to 5, characterised in that the cover and the plug incorporate venting orifices (27, 29; 115, 116) in the zones covering the expansion chambers (B, C).

7. Support as claimed in any one of claims 1 to 6, characterised in that the diaphragm (18; 113) is held at its circumference between the frame (2; 102) carrying the partition, and a substantially radial flange on the cover.

FIG.1

FIG.2

EP 0 298 862 B1

EP 0 298 862 B1

## FIG.3

## FIG.4

FIG.5